# EUROPÄISCHE PATENTSCHRIFT

(11) **EP 2 268 519 B1**
(45) Veröffentlichungstag und Bekanntmachung des Hinweises auf die Patenterteilung: **28.11.2012**
(21) Anmeldenummer: 09734214.1
(22) Anmeldetag: 19.02.2009
(51) Int. Cl.: B60T 8/40, B60T 17/22, B60T 13/66

(54) **BESTIMMUNG EINER LEISTUNGSFÄHIGKEIT EINER KRAFTFAHRZEUG-HYDRAULIKPUMPE, VERFAHREN, COMPUTERPROGRAMMPRODUKT - UND - VORRICHTUNG**
DETERMINATION OF A CAPACITY OF A MOTOR VEHICLE HYDRAULIC PUMP, METHOD, COMPUTER PROGRAM PRODUCT AND DEVICE
DÉTERMINATION DE LA CAPACITÉ D'UNE POMPE HYDRAULIQUE DE VÉHICULE AUTOMOBILE, DISPOSITIF ET PROGRAMME INFORMATIQUE ET PROCÉDÉ

(30) Priorität: 24.04.2008 DE 102008020566
(43) Veröffentlichungstag der Anmeldung: 05.01.2011
(73) Patentinhaber: Lucas Automotive GmbH, 56070 Koblenz (DE)
(72) Erfinder: GILLES, Leo, 56077 Koblenz (DE)
(74) Vertreter: Röthinger, Rainer
(86) Internationale Anmeldenummer: PCT/EP2009/001196
(87) Internationale Veröffentlichungsnummer: WO 2009/129883

(56) Entgegenhaltungen:
- WO-A-01/72568
- DE-A1- 19 744 522
- DE-A1-102005 026 740
- DE-C2- 4 439 890
- US-A- 6 132 012

## Beschreibung

### Technisches Gebiet

Die Erfindung betrifft eine Kraftfahrzeug-Bremsanlage. Insbesondere betrifft die Erfindung die Druckerzeugung in einer hydraulischen Kraftfahrzeug-Bremsanlage.

### Technischer Hintergrund

In Kraftfahrzeugen, die mit hydraulischen Bremsanlagen ausgestattet sind, werden Hydraulikpumpen zum fahrerunabhängigen Aufbau eines hydraulischen Bremsdrucks eingesetzt. Dabei betätigt üblicherweise ein Antrieb, beispielsweise ein Elektromotor, mehrere Pumpenelemente einer Pumpe, welche verschiedenen Bremskreisen des Kraftfahrzeugs zugeordnet sind. Ein Bestimmen eines Defekts an einem der Pumpenelemente ist unschwierig, solange nur ein Pumpenelement für jeden Bremskreis verwendet wird. Ist eine Leistungsfähigkeit eines der Pumpenelemente durch einen Defekt mangelhaft, so kann in dem zugeordneten Bremskreis überhaupt kein Bremsdruck mehr fahrerunabhängig aufgebaut werden und die Auswirkungen des Defekts sind durch einen Ausfall des betreffenden Bremskreises unmittelbar erkennbar.

Fortgeschrittene Bremsanlagen erfordern Hydraulikpumpen, die besonders leistungsfähig sind und deren hydraulischer Druck einen konstanteren Verlauf aufweist, als mit einem einzelnen Pumpenelement pro Bremskreis erzielbar wäre. Es werden daher bereits Pumpen eingesetzt, die pro Bremskreis zwei oder mehr Pumpenelemente aufweisen.

Ist die Leistungsfähigkeit eines der Pumpenelemente in einer solchen 4- oder 6-Kolben-Hydraulikpumpe mangelhaft, beispielsweise wegen einer Undichtigkeit, wegen verschlissener Komponenten des Pumpenelements oder wegen eines anderen Defekts, so macht sich eine mangelnde Leistungsfähigkeit der gesamten Pumpe unter Umständen erst dann bemerkbar, wenn ein hoher Druck über eine längere Zeit hinweg erzeugt werden muss. Fahrzustände des Kraftfahrzeugs, in denen solche Anforderungen an die Hydraulikpumpe gestellt werden, umfassen beispielsweise Gefahrenbremsungen. Um es zu vermeiden, dass eine mangelnde Leistungsfähigkeit der Hydraulikpumpe erst durch eine mangelnde Wirksamkeit der Bremsanlage des Kraftfahrzeugs während eines solchen Fahrzeugzustandes erkennbar wird, ist eine Überprüfung der Leistungsfähigkeit der einzelnen, den Bremsdruck aufbauenden Pumpenelemente erforderlich.

Aus der US-A-6 132 012 ist ein elektronisches Steuergerät für eine Kraftfahrzeug-Bremsanlage bekannt. Das Steuergerät ist dazu ausgebildet, eine mangelnde Leistungsfähigkeit einer Hydraulikpumpe auf der Grundlage eines Gradienten eines Hyd- raulikdruckanstiegs zu ermitteln.

Hydraulische Drucksensoren, insbesondere solche hoher Qualität, wie sie für hochwertige Bremsanlagen erforderlich sind, sind kostenintensiv und erhöhen die Anzahl sicherheitsrelevanter Bauteile in der Bremsanlage (und damit potentiell die Wahrscheinlichkeit eines Defekts). Der Erfindung liegt daher die Aufgabe zugrunde, eine Technik bereitzustellen, mittels derer eine Leistungsfähigkeit von Pumpenelementen einer Pumpe erforderlichenfalls (z.B. bei Einsparung oder Ausfall des Drucksensors) auch drucksensorlos bestimmt werden kann.

### Abriss der Erfindung

Gemäß einem ersten Aspekt wird ein Verfahren zum Bestimmen einer mangelnden Leistungsfähigkeit einer von einem Elektromotor betätigten Pumpe einer hydraulischen Bremsanlage eines Kraftfahrzeugs bereitgestellt, welches die Schritte des Erzeugens eines Hydraulikdrucks in einem ersten Bremskreis der Bremsanlage mittels mehrerer, dem ersten Bremskreis zugeordneter Pumpenelemente der Pumpe, des Begrenzens des erzeugten Hydraulikdrucks auf einen Testdruck und des gleichzeitigen Erfassens eines motorbezogenen Parameters, und des Bestimmens einer mangelnden Leistungsfähigkeit wenigstens eines der Pumpenelemente auf der Grundlage eines Vergleichs des Parameters mit einem Vergleichswert umfasst.

Der motorbezogene Parameter kann beispielsweise eine Strom- bzw. Leistungsaufnahme, eine Drehzahl oder ein Nachlaufverhalten des Elektromotors sein. Auch kann sich der Parameter auf einen zeitlichen Verlauf dieser oder anderer Größen beziehen. Umfasst das Bestimmen die Ermittlung, ob der Parameter um mehr als ein vorgegebenes Maß von dem Vergleichswert abweicht, kann das Ermitteln eines Unterschiedes zwischen dem Parameter und dem Vergleichswert durch einen Vergleich dieses Parameters mit einem Schwellenwert erfolgen.

Der Testdruck kann beispielsweise ein Druck sein, der größer als ein im üblichen Bremsbetrieb zu erzeugender Druck ist, um bereits einen geringen Defekt, der den Bremsbetrieb noch nicht gefährdet, bestimmen zu können. Der Testdruck kann ein fest vorgegebener Wert sein. Ferner kann der Testdruck auf Basis weiterer Parameter situationsbezogen vorgegeben werden, beispielsweise auf Basis einer Laufleistung des Kraftfahrzeugs seit einem vergangenen Durchführen des Verfahrens, einem zurückliegenden Ergebnis des Verfahrens oder eines anderen, auf das Kraftfahrzeug bezogenen Parameters.

Der Vergleichswert kann fest gewählt sein. Beispielsweise kann der Vergleichswert in Form eines Wertes abgespeichert sein. Der Vergleichswert kann auch durch eine Bauart eines Vergleichselements (z. B. eines festen elektrischen Widerstandes) bestimmt sein. Alternativ oder zusätzlich dazu kann der Vergleichswert beispielsweise mit dem Testdruck parametrisch korreliert sein.

Alternativ dazu kann der Vergleichswert ein zweiter motorbezogene Parameter sein, der erfasst wird, während ein Bremsdruck auf den Testdruck begrenzt wird, der in einem zweiten Bremskreis des Kraftfahrzeugs mittels mehrerer, dem zweiten Bremskreis zugeordneter Pumpenelemente der Pumpe erzeugt wird. Beispielsweise kann die Pumpe bezüglich zweier Bremskreise symmetrisch aufgebaut sein und bei Vorliegen voller Leistungsfähigkeit aller Pumpenelemente der motorbezogene Parameter bei Erzeugen eines auf den Testdruck begrenzten hydraulischen Drucks im ersten Bremskreis dem motorbezogenen Parameter beim Erzeugen eines auf den Testdruck begrenzten Drucks im zweiten Bremskreis entsprechen.

Der Vergleichswert kann ein zu einem früheren Zeitpunkt bestimmter Wert des ersten und/oder zweiten motorbezogenen Parameters sein. Dabei kann sich der Vergleichswert auf den selben oder einen anderen Bremskreis beziehen.

Der erste und/oder der zweite motorbezogene Parameter kann jeweils eine Zeitspanne angeben. Beispielsweise kann er eine Zeitspanne angeben, die verstreicht, bis eine Strom- bzw. Leistungsaufnahme, eine Drehzahl oder ein Nachlaufverhalten des Elektromotors einen vorgegebenen Wert oder Bereich erreicht bzw. überschreitet oder bis eine Änderungsgeschwindigkeit eines solchen Wertes einen vorgegebenen Wert über- bzw. unterschreitet. Die Zeitspanne kann beispielsweise mit einem Starten des Elektromotors beginnen.

Das Begrenzen eines Hydraulikdrucks in einem Bremskreis kann mittels eines dem Bremskreis zugeordneten Abströmventils erfolgen. Hierzu kann beispielsweise eine elektrisch ansteuerbare Ventilanordnung verwendet werden, bei der die für die Druckbegrenzungsfunktion maßgebende Druckdifferenz, bei der sich die Ventilanordnung selbsttätig in ihre Durchlassstellung überführt, über die elektrische Ansteuerung einstellbar ist. Eine solche Ventilanordnung ist beispielsweise in der DE 44 39 890 C2 gezeigt. Als elektrische Ansteuerung kann in bekannter Weise eine Pulsweitenmodulation (PWM), deren Puls-Pause-Verhältnis einstellbar ist, dienen. Eine elektrische Ansteuerung einer derartigen Ventilanordnung im Sinne einer Abströmregelung ist beispielsweise in der DE 10 2005 026 740 A1 beschrieben.

Das Verfahren kann ferner den Schritt des Bestimmens eines stabilen Fahrzeugzustandes des Kraftfahrzeugs und des anschließenden Durchführens des beschriebenen Verfahrens im stabilen Fahrzeugzustand umfassen. Ein Fahrzeugzustand kann beispielsweise einen Bewegungszustand (Geschwindigkeit, Bewegungsrichtung und Beschleunigung) des Kraftfahrzeugs umfassen. Ein stabiler Fahrzeugzustand kann beispielsweise bei einem erkannten Stillstand des Kraftfahrzeugs und gleichzeitig ausgeschalteter oder gerade erst eingeschalteter Zündung erkannt werden.

Ferner kann das Verfahren den Schritt des Betätigens eines hydraulischen Ventils, welches wenigstens eine Radbremse von der Pumpe hydraulisch trennt, umfassen. Beispielsweise kann ein Hydraulikdruck an der Radbremse gezielt aufgebaut oder abgelassen werden, bevor das Ventil geschlossen und das oben ausgeführte Verfahren durchgeführt wird. Auf diese Weise können die an der Bestimmung der Leistungsfähigkeit der Pumpe nicht beteiligten Radbremsen ein Resultat des Verfahrens nicht beeinflussen. Darüber hinaus kann das Kraftfahrzeug auf diese Weise während des Durchführens des Verfahrens in einem stabilen Fahrzeugzustand gehalten werden.

Gemäß einem zweiten Aspekt wird ein Computerprogrammprodukt mit Programmcodemitteln zur Durchführung des oben beschriebenen Verfahrens bereitgestellt, wenn das Computerprogrammprodukt auf einer Verarbeitungseinheit (z.B. einem elektrischen Steuergerät, auch ECU genannt) läuft. Eine solche Verarbeitungseinheit kann weitere Bremsfunktionalitäten des Kraftfahrzeugs steuern, beispielsweise ABS, ESP, eine Parkbrems-Steuerung etc..

Das Computerprogrammprodukt kann auf einem computerlesbaren Datenträger gespeichert sein. Beispielsweise kann das Computerprogrammprodukt auf einem beweglichen Datenträger, wie beispielsweise einer Diskette, einer Festplatte, einer CD oder DVD, oder auf einem festen Datenträger, wie beispielsweise einem Halbleiterspeicher (etwa ein RAM, ROM, EPROM, EEPROM, NOVRAM oder FLASH) gespeichert sein.

Gemäß einem dritten Aspekt wird eine Vorrichtung zur Bestimmung einer mangelnden Leistungsfähigkeit einer von einem Elektromotor betätigten Pumpe einer hydraulischen Bremsanlage eines Kraftfahrzeugs bereitgestellt, wobei die Vorrichtung eine Druckerzeugungseinrichtung zur Erzeugung eines Hydraulikdrucks in einem ersten Bremskreis der Bremsanlage mittels mehrerer, dem ersten Bremskreis zugeordneter Pumpenelemente der Pumpe, eine erste Begrenzungseinrichtung zur Begrenzung des Hydraulikdrucks auf einen Testdruck, eine Erfassungseinrichtung zur gleichzeitigen Erfassung eines ersten motorbezogenen Parameters und eine Bestimmungseinrichtung zur Bestimmung einer mangelnden Leistungsfähigkeit wenigstens eines der Pumpenelemente auf der Grundlage eines Vergleichs des Parameters mit einem Vergleichswert umfasst.

Die Erfassungseinrichtung kann beispielsweise einen aufgenommenen Strom bzw. eine aufgenommene Leistung, eine Drehzahl oder ein Nachlaufverhalten des Elektromotors erfassen. Die Bestimmungseinrichtung kann mit einer Ausgabeeinrichtung verbunden sein, welche eine mangelnde Leistungsfähigkeit der Pumpe signalisiert. Die Ausgabeeinrichtung kann beispielsweise optische und/oder akustische Signalelemente umfassen. Zusätzlich oder alternativ hierzu kann beispielsweise eine Ausgabe in einen Speicher erfolgen, etwa in einen nicht-flüchtigen Fehlerspeicher des Kraftfahrzeugs zum Auslesen bei späteren Wartungsarbeiten.

Die Vorrichtung kann ferner eine zweite Begrenzungseinrichtung zur Begrenzung eines Hydraulikdrucks, der mittels mehrerer, einem zweiten Bremskreis zugeordneter Pumpenelemente der Pumpe erzeugt wird, umfassen. Die zweite Begrenzungseinrichtung kann ausgebildet sein, den Hydraulikdruck auf den Testdruck zu begrenzen.

Die Pumpenelemente können Zylinder-Kolbeneinheiten umfassen. Jede Zylinder-Kolbeneinheit kann mindestens einen Zylinder, einen darin geführten Kolben und geeignete Dichtungselemente umfassen. Insbesondere können die Kolben beispielsweise radial um eine mit dem Elektromotor drehfest gekoppelte stehende Exenteranordnung verteilt sein. Die Verteilung der Pumpenelemente kann auch (ggf. zusätzlich) eine Verteilung entlang einer axialen Richtung der Exenteranordnung umfassen.

Die Begrenzungseinrichtung kann ein hydraulisches Abströmventil umfassen. Das Abströmventil kann elektrisch ansteuerbar sein, um einen hydraulischen Druck in einem Bremskreis auf einen vorbestimmten Druck zu begrenzen. Beispielsweise ist eine Ansteuerung mittels eines analogen oder digitalen Signals, etwa eines PWM-Signals, möglich. In weiteren Ausführungsformen kann das Abströmventil beispielsweise mittels eines Stellmotors oder auch anderweitig einstellbar sein.

Die Vorrichtung kann ein Ventil zur hydraulischen Trennung wenigstens einer Radbremse von der Pumpe umfassen. Das Ventil kann beispielsweise auch Bestandteil eines ABS-Systems sein. Es kann ein radindividuelles Ventil zur hydraulischen Trennung der Radbremse von der Pumpe vorgesehen sein; alternativ oder zusätzlich hierzu kann auch ein zentrales Sperrventil, beispielsweise an einem Anschluss der Pumpe, der mit einem Bremskreis verbunden ist, vorgesehen sein, welches ausgebildet ist, mehrere Radbremsen hydraulisch von der Pumpe zu trennen.

### Kurze Beschreibung der Zeichnungen

Weitere Merkmale und Vorzüge der Erfindung werden nun im Zusammenhang mit einem Ausführungsbeispiel und den beigefügten Zeichnungen beschrieben, von denen:
Fg. 1 einen schematischen Überblick eines hydraulischen Kraftfahrzeug-Bremssystems zeigt;
Fig. 2 ein hydraulisches Schaltbild einer hydraulischen Bremsanlage des Kraftfahrzeug-Bremssystems von Fig. 1 zeigt;
Fig. 3 ein Ablaufdiagramm eines Verfahrens zum Bestimmen einer Leistungsfähigkeit einer Pumpe einer Kraftfahrzeug-Bremsanlage nach Fig. 2 zeigt; und
Fig. 4 zeitliche Verläufe von hydraulischen Drücken und motorbezogenen Parametern in der hydraulischen Bremsanlage von Fig. 2 zeigt.

Einander entsprechende Elemente in den Zeichnungen tragen übereinstimmende Bezugszeichen.

### Beschreibung eines bevorzugten Ausführungsbeispiels

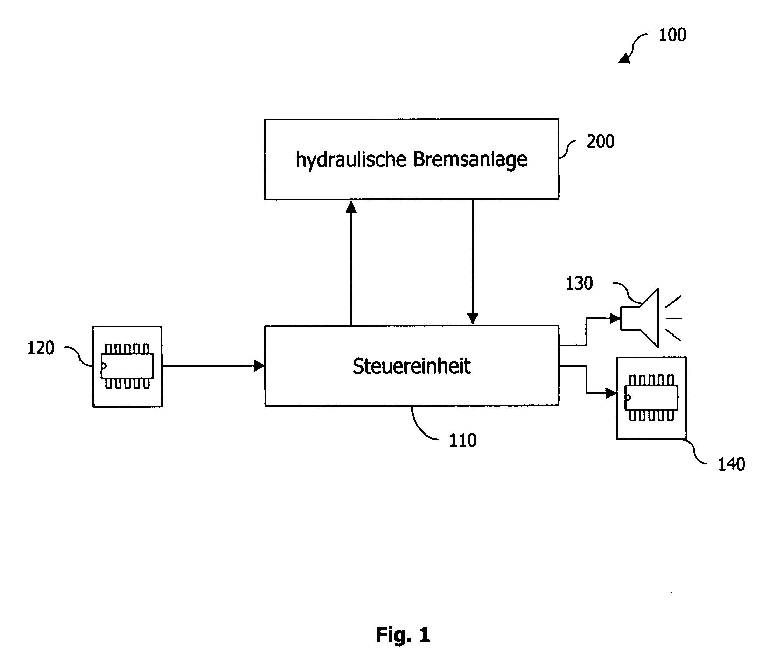

Fig. 1 zeigt einen Überblick über ein Ausführungsbeispiel eines hydraulischen Bremssystems 100 eines Kraftfahrzeugs. Das Bremssystem 100 umfasst eine hydraulische Bremsanlage 200, eine Steuereinheit (ECU) 110, einen Speicher 120, eine Ausgabeeinrichtung 130 und einen Fehlerspeicher 140. Die Steuereinheit 110 und die hydraulische Bremsanlage 200 sind miteinander elektrisch verbunden. Die Steuereinheit 110 ist ferner lesend mit dem Speicher 120 und schreibend mit dem Fehlerspeicher 140 verbunden. Außerdem ist die Steuereinheit 110 zur Ausgabe von Ergebnissen mit der Ausgabeeinrichtung 130 verbunden.

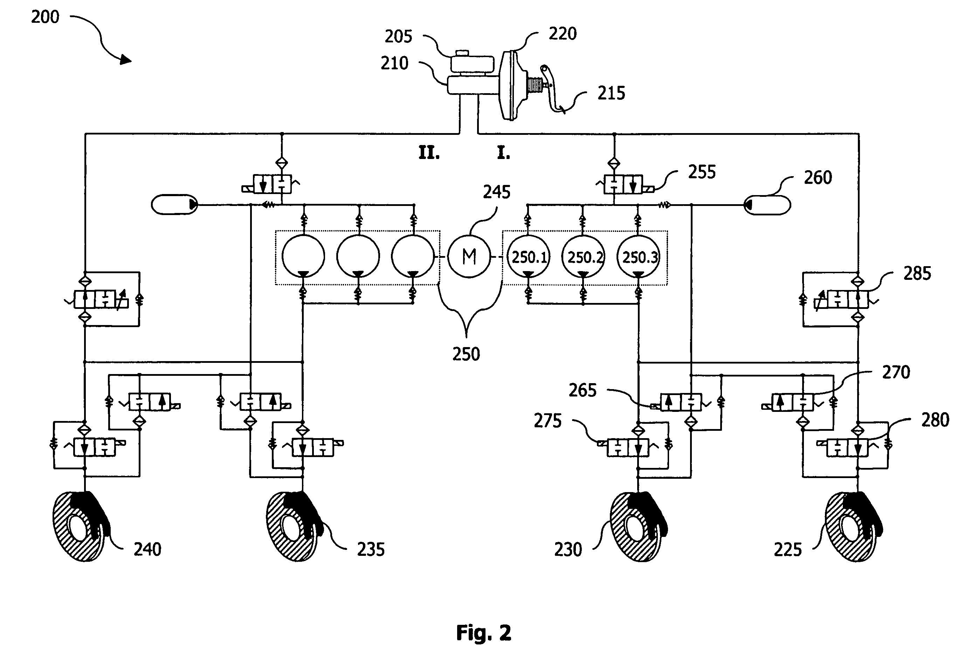

Fig. 2 zeigt ein hydraulisches Schaltbild der hydraulischen Bremsanlage 200 aus Fig. 1. Die Bremsanlage 200 umfasst einen Behälter 205 zur Aufnahme von Hydraulikfluid, einen Hauptbremszylinder 210, ein Brems-Pedal 215, einen Bremskraftverstärker 220 und zwei auf Radbremsen 225 bis 240 wirkende Bremskreise I. und II., die im Wesentlichen identisch aufgebaut sind, weshalb im Folgenden lediglich der erste Bremskreis I. genauer beschrieben wird. Beiden Bremskreisen I. und II. zusammen sind ein Elektromotor 245 und eine vom Elektromotor 245 betätigte 6-Kolbenpumpe 250 zugeordnet. Ferner umfasst der erste Bremskreis I. ein Zuflussventil 255, einen Druckspeicher 260, elektrisch steuerbare ABS-Ventile 265 bis 280, die den Radbremsen 225 und 230 zugeordnet sind, und ein elektrisch steuerbares Abströmventil 285.

Ein hydraulischer Druck zur Betätigung der Radbremsen 225 und 230 kann vom Fahrer mittels der Elemente 205 bis 220 oder fahrerunabhängig mittels der Pumpe 250 erzeugt werden. Die Pumpe 250 umfasst sechs in einem gemeinsamen Gehäuse angeordnete Pumpenelemente, von denen die drei Pumpenelemente 250.1 bis 250.3 dem ersten Bremskreis I. zugeordnet sind. Jedes der Pumpenelemente 250.1 bis 250.3 umfasst einen Zylinder, einen darin geführten Kolben und geeignete Dichtungselemente (nicht dargestellt).

Das Abströmventil 285 begrenzt einen hydraulischen Druck, der zum Aufbau von Bremskräften in den Radbremsen 225 und 230 erzeugt wurde. Das Abströmventil 285 kann durch elektrische Ansteuerung in eine Durchlassstellung oder eine Sperrstellung überführt werden. In der Sperrstellung führt sich das Abströmventil 285 selbsttätig in die Durchlassstellung über, sobald eine für die Druckbegrenzungsfunktion des Abströmventils 285 maßgebende Druckdifferenz zwischen seinen hydraulischen Anschlüssen einen elektrisch einstellbaren Wert überschreitet. Auf diese Weise lässt sich im Bremskreis I. ein Solldruck einstellen.

Üblicherweise werden die ABS-Ventile 265 bis 280, das Zuflussventil 255 und das Abströmventil 285 im Rahmen eines sicherheitsrelevanten Bremseingriffs (nicht gezeigt), wie einem ESP-Eingriff, angesteuert. Durch entsprechende Ansteuerung der ABS-Ventile 265 bis 280 ist es möglich, den in den Radbremsen 225 und 230 herrschenden hydraulischen Druck radindividuell zu erhöhen, zu halten und zu verringern. Bei fahrerunabhängiger Bremsdruckerzeugung, beispielsweise im ESP-Betrieb, wird die Pumpe 250 durch Einschalten des Elektromotors 245 aktiviert. Das Zuflussventil 255 wird derart eingestellt, dass das Hydraulikfluid aus dem Hauptbremszylinder 210 von der Pumpe 250 angesaugt werden kann. Das Abströmventil 285 wird derart eingestellt, dass der zur ESP-geregelten Druckeinstellung in den Radbremsen 225 und 230 erforderliche Druck eingestellt werden kann.

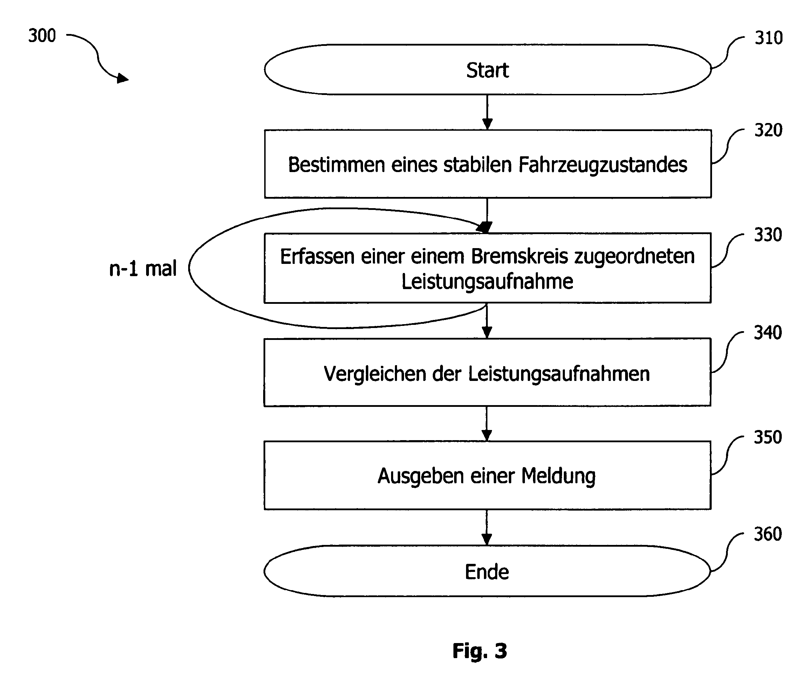

Fig. 3 zeigt ein Ablaufdiagramm 200 eines Verfahrens zum Bestimmen einer Leistungsfähigkeit der Pumpe 250 in der hydraulischen Kraftfahrzeug-Bremsanlage 200 nach Fig. 2.

Das Verfahren befindet sich in einem Schritt 310 im Anfangszustand. In einem folgenden Schritt 320 wird ein stabiler Fahrzeugzustand bestimmt. Dies kann ein Stillstand des Kraftfahrzeugs bei ausgeschalteter Zündung sein, beispielsweise nach einem Abstellen oder vor dem Starten eines Antriebsmotors. Alternativ dazu kann das Verfahren auch nach dem Einschalten der Zündung, aber vor dem Starten des Motors fortgeführt werden. Eine weitere Alternative wäre es, das Verfahren in einem stabilen Fahrzustand (z.B. bei geringen Geschwindigkeiten) durchzuführen. In diesem Fall ist es notwendig, die Radbremsen 225, 230 mittels der ABS-Ventile 265 bis 280 hydraulisch von der Pumpe 250 abzukoppeln. Kann ein stabiler Fahrzeugzustand nicht bestimmt werden, so verharrt das Verfahren im Schritt 320, um eine Betriebssicherheit des Kraftfahrzeugs während des Überprüfens der Leistungsfähigkeit nicht zu gefährden.

Ist ein stabiler Fahrzeugzustand bestimmt worden, so wird in einem folgenden Schritt 330 der Elektromotor 245 eingeschaltet und eine Leistungsaufnahme des Elektromotors 245 erfasst, die einem Testdruck innerhalb des ersten Bremskreises zugeordnet ist, hier dem Bremskreis I. aus Fig. 2. Dazu wird das Abströmventil 285 derart eingestellt, dass der hydraulische Druck am Ausgang der Pumpenelemente 250.1 bis 250.3 auf einen Wert begrenzt ist, der oberhalb eines üblicherweise während Betriebsbremsungen verwendeten Hydraulikdrucks liegt, beispielsweise 60 bis 80 bar. Um eine Beeinflussung des Verfahrens durch die Radbremsen 225 und 230 zu verringern, werden darüber hinaus die Ventile 265 bis 280 geschlossen.

Parallel dazu werden die Ventile des Bremskreises II. derart angesteuert, dass die dem Bremskreis II. zugeordneten Pumpenelemente dem Elektromotor 245 einen möglichst geringen mechanischen Widerstand entgegensetzen, damit die Leistungsaufnahme des Elektromotors 245 möglichst stark mit einer Druckerzeugung im ersten Bremskreis I. korreliert. Dazu wird das dem Abströmventil 285 entsprechende Ventil des Bremskreises II. auf einen möglichst geringen Druck (beispielsweise 1 bar oder noch geringer) eingestellt und die den Ventilen 265 bis 280 entsprechenden ABS-Ventile des Bremskreises II. geschlossen.

Sollte eines der dem Bremskreis I. zugeordneten Pumpenelemente 250.1 bis 250.3 lediglich über eine eingeschränkte Leistungsfähigkeit verfügen, so wird im Bremskreis I. der mit dem Abströmventil 285 begrenzte Druck von z.B. 70 bar nicht erreicht und der dem Elektromotor 245 von der gesamten Pumpe 250 entgegengesetzte mechanische Widerstand ist geringer als bei einer vollen Leistungsfähigkeit aller Pumpenelemente. Dementsprechend ist auch eine Leistungsaufnahme des Elektromotors 245 geringer als bei der Erzeugung des vorbestimmten Drucks von 70 bar, was in einer vergleichsweise geringeren Stromaufnahme des Elektromotors 245 resultiert.

Diese Vorgehensweise des Schritts 330 wird nacheinander für jeden der Bremskreise der Bremsanlage 200 durchgeführt, so dass abschließend für jeden Bremskreis eine zugeordnete Leistungsaufnahme vorliegt.

In einem Schritt 340 werden die derart bestimmten Leistungsaufnahmen miteinander verglichen. Dabei wird eine mangelnde Leistungsfähigkeit wenigstens eines Pumpenelementes in einem der Bremskreise erkannt, falls die diesem Bremskreis zugeordnete Leistungsaufnahme geringer als eine einem anderen Bremskreis zugeordnete Leistungsaufnahme ist. Ein Unterschied zwischen Stromaufnahmen, die unterschiedlichen Bremskreisen zugeordnet sind, kann noch mit einem Schwellenwert verglichen werden, um Fehlbestimmungen zu vermeiden. Ein Schwellenwert kann absolut (z. B.: 3 bar oder 10 bar) oder relativ (beispielsweise 5% oder 10% des größeren Werts) angegeben sein. Sowohl der Schwellenwert, als auch Vergleichswerte für die Leistungsaufnahme des Elektromotors sind im Speicher 120 abgelegt, aus dem sie von der Steuereinheit 110 gelesen werden.

Anschließend wird in einem Schritt 350 ein Resultat des Vergleichs aus dem Schritt 340 in Form eines Fahrersignals mittels der Ausgabeeinrichtung 130 und/oder in Form eines Eintrags im Fehlerspeicher 140 ausgegeben bzw. abgespeichert (vgl. Fig. 1). Optional kann zu diesem Zeitpunkt auch ein im Schritt 330 für die Leistungsaufnahme des Elektromotors bestimmter Wert für einen späteren Vergleich im Speicher 120 abgelegt werden.

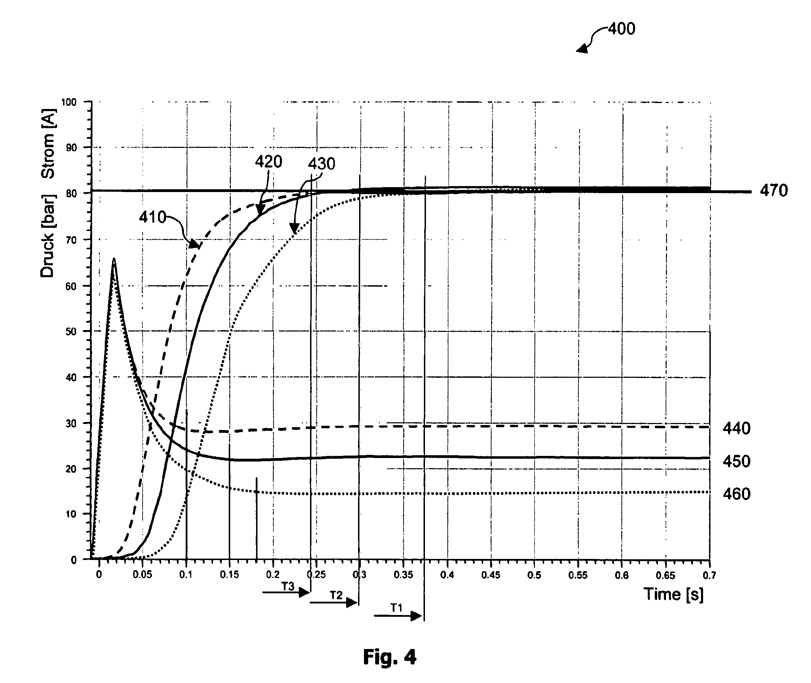

Fig. 4 zeigt eine graphische Darstellung 400 zeitlicher Verläufe von hydraulischen Drücken 410, 420 und 430 im Bremskreis I. der hydraulischen Bremsanlage von Fig. 2 und Verläufe 440, 450 und 460 von Stromaufnahmen des Elektromotors 245. Die horizontale Achse ist die Zeitachse und die vertikale Achse bezeichnet einen Druck bzw. eine Stromaufnahme. Die horizontale Linie 470 stellt den durch das Abströmventil 285 eingestellten hydraulischen Test- bzw. Grenzdruck von ca. 80 bar dar.

Der Druckverlauf 410 entspricht einer Situation, in der alle drei Pumpenelemente 250.1, 250.2 und 250.3 betriebsfähig sind. Dabei nimmt der Elektromotor 245 den im Verlauf 440 dargestellten elektrischen Strom auf. Der Druckverlauf 420 entspricht einer Situation, in der eines der Pumpenelemente 250.1, 250.2 und 250.3 nicht betriebsfähig ist; diesem Druckverlauf 420 ist der Verlauf 450 der Stromaufnahme des Elektromotors 245 zugeordnet. In einer Situation, in der zwei der Pumpenelemente 250.1, 250.2 und 250.3 nicht betriebsfähig sind, ergibt sich ein Druckverlauf 430, dem ein Verlauf 460 der Stromaufnahme des Elektromotors 245 zugeordnet ist.

Es ist zu erkennen, dass bei drei betriebsfähigen Pumpenelementen 250.1 bis 250.3 der vorgegebene Grenzdruck 470 relativ früh, nämlich zu einem Zeitpunkt T3 erreicht wird. Derselbe Grenzdruck 470 wird bei Betriebsfähigkeit von nur zwei Pumpenelementen 250.1 bis 250.3 vom Druckverlauf 420 erst zu einem späteren Zeitpunkt T2 erreicht. Bei nur einem betriebsfähigen Pumpenelement 250.1 bis 250.3 erreicht der Druckverlauf 430 erst zu einem noch späteren Zeitpunkt T1 den vorgegebenen Grenzdruck 470.

Die Verläufe der Stromaufnahmen 440 bis 460 sind in einem Anfangsbereich bis etwa 0,05 Sek. zueinander annähernd deckungsgleich; danach nähern sie sich mit unterschiedlichen Geschwindigkeiten asymptotisch an unterschiedliche, im Wesentlichen konstante Dauer-Stromaufnahmen an. Aus einer Betrachtung der Verläufe der Stromaufnahme 440, 450 und 460 lässt sich eine Leistungsfähigkeit eines, zweier oder aller der Kolbenpumpen-Elemente 250.1 bis 250.3 entweder daran erkennen, wie hoch die Stromaufnahme im Gleichgewichtszustand ist, oder daran, wie viel Zeit nach einem Einschalten des Elektromotors vergeht, bis die Stromaufnahme im Wesentlichen unveränderlich ist. Der Stromverlauf 440 verläuft ab ca. 0,1 Sek. im Wesentlichen konstant, der Stromverlauf 450 ab ca. 0,15 Sek. und der Stromverlauf 460 ab ca. 0,18 Sek. Ein defektes Pumpenelement 250,1 bis 250.3 kann also dadurch erkannt werden, dass die Stromaufnahme des Elektromotors 245 später als erwartet nach einem Einschalten des Elektromotors 245 im Wesentlichen konstant bleibt. Eine Bestimmung, wann einer der Verläufe der Stromaufnahmen 440, 450 und 460 im wesentlichen konstant ist, kann beispielsweise mittels eines Differentiationsschrittes bzw. eines Differentiationsgliedes bestimmt werden.

In einer ersten beispielhaften Ausgestaltung der Erfindung wird eine Zeitspanne, die zwischen dem Einschalten des Elektromotors 245 und dem Erreichen einer konstanten Stromaufnahme des Elektromotors 245 liegt, als motorbezogener Parameter verwendet und mit einer oder mehreren vorbestimmten (z.B. zuvor gemessenen oder fest hinterlegten) Zeitspannen verglichen, um die Leistungsfähigkeit der Pumpenelemente 250.1 bis 250.3 zu bestimmen. Ist mit Bezug auf Fig. 4 die bestimmte Zeitspanne kürzer als ca. 0,1 Sek., so werden alle drei Pumpenelemente 250.1 bis 250.3 als funktionsfähig bestimmt. Liegt die bestimmte Zeitspanne zwischen ca. 0,1 und ca. 0,15 Sek., so wird bestimmt, dass eines der Pumpenelemente 250.1 bis 250.3 nicht leistungsfähig ist. Bei einer zwischen ca. 0,15 und ca. 0,18 Sek. liegenden bestimmten Zeitspanne wird eine mangelnde Leistungsfähigkeit von zweien der Pumpenelemente 250.1 bis 250.3 bestimmt.

In einer zweiten beispielhaften Ausgestaltung der Erfindung wird der absolute Stromwert im Bereich der konstanten Stromaufnahme des Elektromotors 245 als motorbezogener Parameter verwendet und zur Bestimmung der Leistungsfähigkeit der Pumpenelemente 250.1 bis 250.3 mit einem oder mehreren absoluten Stromwerten verglichen. Liegt mit Bezug auf Fig. 4 die im Wesentlichen konstante Stromaufnahme des Elektromotors 245 oberhalb von ca. 26 A, so wird eine Leistungsfähigkeit aller drei Pumpenelemente 250.1 bis 250.3 bestimmt. Liegt die bestimmte Stromaufnahme dagegen zwischen ca. 26 A und ca. 18 A, so wird eine mangelnde Leistungsfähigkeit eines der Pumpenelemente 250.1 bis 250.3 bestimmt, während eine geringere Stromaufnahme als ca. 18 A zur Bestimmung einer mangelnden Leistungsfähigkeit zweier der Pumpenelemente 250.1 bis 250.3 führt. Ab welchem Zeitpunkt die Stromaufnahme des Elektromotors 245 im Wesentlichen konstant ist, kann wie oben beschrieben bestimmt werden; alternativ hierzu kann auch ein Messzeitpunkt gewählt werden, zu dem einer im Wesentlichen konstanten Stromaufnahme ausgegangen werden kann, beispielsweise ca. 0,2 Sek. nach dem Einschalten.

Auf die beschriebene Weise lässt sich eine hydraulische Bremsanlage eines Kraftfahrzeugs so steuern, dass eine mangelnde Leistungsfähigkeit wenigstens eines Pumpenelements bestimmt werden kann. Eine Erweiterung einer im Rahmen etwa eines ABS- oder ESP-Systems bereits vorhandenen hydraulischen Bremsanlage ist hierfür nicht erforderlich. Insbesondere müssen zur Leistungsfähigkeitsprüfung der Pumpe keine Drucksensoren verwendet werden, obwohl deren Verwendung (z.B. zu anderen Zwecken) in der Bremsanlage durchaus möglich ist.

## Patentansprüche

1. Verfahren (300) zum Bestimmen einer mangelnden Leistungsfähigkeit einer von einem Elektromotor (245) betätigten Pumpe (250) einer hydraulischen Bremsanlage (200) eines Kraftfahrzeugs, folgende Schritte umfassend:
- Erzeugen eines Hydraulikdrucks in einem ersten Bremskreis (I.) der Bremsanlage (200) mittels mehrerer, dem ersten Bremskreis (I.) zugeordneter Pumpenelemente (250.1 - 250.3) der Pumpe (250);
- Begrenzen des erzeugten Hydraulikdrucks auf einen Testdruck und gleichzeitiges Erfassen eines ersten motorbezogenen Parameters; und
- Bestimmen einer mangelnden Leistungsfähigkeit wenigstens eines der Pumpenelemente (250.1 - 250.3) auf der Grundlage eines Vergleichs des Parameters mit einem Vergleichswert.

2. Verfahren (300) nach Anspruch 1, **dadurch gekennzeichnet, dass** der Vergleichswert fest gewählt ist.

3. Verfahren (300) nach Anspruch 1, **dadurch gekennzeichnet, dass** der Vergleichswert ein zweiter motorbezogene Parameter ist, der während eines Begrenzens eines Hydraulikdrucks, der in einem zweiten Bremskreis (II.) des Kraftfahrzeugs mittels mehrerer, dem zweiten Bremskreis (II.) zugeordneter Pumpenelemente der Pumpe (250) erzeugt wird, auf den Testdruck erfasst wird.

4. Verfahren (300) nach einem der Ansprüche 1 oder 3, **dadurch gekennzeichnet, dass** der Vergleichswert ein zu einem früheren Zeitpunkt bestimmter Wert des ersten und/oder zweiten motorbezogenen Parameters ist.

5. Verfahren (300) nach einem der vorangehenden Ansprüche, **dadurch gekennzeichnet, dass** der erste und/oder zweite motorbezogene Parameter jeweils eine Zeitspanne angibt.

6. Verfahren (300) nach einem der vorangehenden Ansprüche, wobei das Begrenzen eines Hydraulikdrucks mittels eines dem Bremskreis (I., II.) zugeordneten Abströmventils (285) durchgeführt wird.

7. Verfahren (300) nach einem der vorangehenden Ansprüche, ferner umfassend den Schritt des Bestimmens eines stabilen Fahrzeugzustandes des Kraftfahrzeugs und des anschließenden Durchführens der Schritte des Erzeugens, Begrenzens und Bestimmens im stabilen Fahrzeugzustand.

8. Verfahren (300) nach einem der vorangehenden Ansprüche, ferner umfassend den Schritt des Betätigens eines hydraulischen Ventils (265, 270, 275, 280), welches wenigstens eine Radbremse (225, 230) von der Pumpe (250) hydraulisch trennt.

9. Computerprogrammprodukt mit Programmcodemitteln zur Durchführung eines Verfahrens nach einem der vorangehenden Ansprüche, wenn das Computerprogrammprodukt auf einer Verarbeitungseinheit (120) läuft.

10. Computerprogrammprodukt, nach dem vorangehenden Anspruch, wenn es auf einem computerlesbaren Datenträger gespeichert ist.

11. Vorrichtung zur Bestimmung einer mangelnden Leistungsfähigkeit einer von einem Elektromotor (245) betätigten Pumpe (250) einer hydraulischen Bremsanlage (200) eines Kraftfahrzeugs, umfassend:
- eine Pumpe (250) zur Erzeugung eines Hydraulikdrucks in einem ersten Bremskreis (I.) der Bremsanlage (200) mittels mehrerer, dem ersten Bremskreis (I.) zugeordneter Pumpenelemente (250.1 - 250.3) der Pumpe (250);
- eine erste Begrenzungseinrichtung (285) zur Begrenzung des Hydraulikdrucks auf einen Testdruck;
- eine Erfassungseinrichtung zur gleichzeitigen Erfassung eines ersten motorbezogenen Parameters; und
- eine Bestimmungseinrichtung zur Bestimmung einer mangelnden Leistungsfähigkeit wenigstens eines der Pumpenelemente (250.1 - 250.3) auf der Grundlage eines Vergleichs des Parameters mit einem Vergleichswert.

12. Vorrichtung nach Anspruch 11, ferner umfassend eine zweite Begrenzungseinrichtung zur Begrenzung eines Hydraulikdrucks, der mittels mehrerer, einem zweiten Bremskreis (II.) zugeordneter Pumpenelemente der Pumpe (250) erzeugt wird.

13. Vorrichtung nach einem der Ansprüche 11 oder 12, **dadurch gekennzeichnet, dass** die Pumpenelemente (250.1 - 250.3) Zylinder-Kolbeneinheiten umfassen.

14. Vorrichtung nach einem der Ansprüche 11 bis 13, **dadurch gekennzeichnet, dass** die Begrenzungseinrichtung ein hydraulisches Abströmventil (285) ist.

15. Vorrichtung nach einem der Ansprüche 11 bis 14, **dadurch gekennzeichnet, dass** sie ein Ventil (265, 270, 275, 280) zur hydraulischen Trennung wenigstens einer Radbremse (225, 230) von der Pumpe (250) umfasst.

## Claims

1. A method (300) for determining a lack of performance of a pump (250), actuated by an electric motor (245), of a hydraulic brake system (200) of a motor vehicle, comprising the following steps:
- generating a hydraulic pressure in a first brake circuit (I.) of the brake system (200) by means of a plurality of pump elements (250.1 - 250.3) of the pump (250) that are assigned to the first brake circuit (I.);
- limiting the generated hydraulic pressure to a test pressure and simultaneously acquiring a first motor-related parameter; and
- determining a lack of performance of at least one of the pump elements (250.1 - 250.3) on the basis of a comparison of the parameter with a comparison value.

2. The method (300) according to Claim 1, **characterized in that** the comparison value is selected so as to be fixed.

3. The method (300) according to Claim 1, **characterized in that** the comparison value is a second motor-related parameter that is acquired while a hydraulic pressure, which is generated in a second brake circuit (II.) of the motor vehicle by means of a plurality of pump elements of the pump (250) that are assigned to the second brake circuit (II.), is limited to the test pressure.

4. The method (300) according to either one of Claims 1 or 3, **characterized in that** the comparison value is a value of the first and/or second motor-related parameter that is determined at an earlier point in time.

5. The method (300) according to any one of the preceding claims, **characterized in that** the first and/or second motor-related parameter each indicates a time span.

6. The method (300) according to any one of the preceding claims, the limiting of a hydraulic pressure being effected by means of a discharge valve (285) assigned to the brake circuit (I., II.).

7. The method (300) according to any one of the preceding claims, further comprising the step of determining a stable vehicle state of the motor vehicle and subsequently executing the steps of generating, limiting and determining in the stable vehicle state.

8. The method (300) according to any one of the preceding claims, further comprising the step of actuating a hydraulic valve (265, 270, 275, 280) that hydraulically separates at least one wheel brake (225, 230) from the pump (250).

9. A computer program product having program code means for executing a method according to any one of the preceding claims when the computer program product runs on a processing unit (120).

10. The computer program product, according to the preceding claim, when it is stored on a computer-readable data medium.

11. A device for determining a lack of performance of a pump (250), actuated by an electric motor (245), of a hydraulic brake system (200) of a motor vehicle, comprising:
- a pump (250) for generating a hydraulic pressure in a first brake circuit (I.) of the brake system (200) by means of a plurality of pump elements (250.1 - 250.3) of the pump (250) that are assigned to the first brake circuit (I.);
- a first limiting device (285) for limiting the hydraulic pressure to a test pressure;
- an acquisition device for simultaneously acquiring a first motor-related parameter; and
- a determination device for determining a lack of performance of at least one of the pump elements (250.1 - 250.3) on the basis of a comparison of the parameter with a comparison value.

12. The device according to Claim 11, further comprising a second limiting device for limiting a hydraulic pressure generated by means of a plurality of pump elements of the pump (250) that are assigned to a second brake circuit (II.).

13. The device according to either one of Claims 11 or 12, **characterized in that** the pump elements (250.1 - 250.3) are cylinder-piston units.

14. The device according to any one of Claims 11 to 13, **characterized in that** the limitation device is a hydraulic discharge valve (285).

15. The device according to any one of Claims 11 to 14, **characterized in that** it comprises a valve (265, 270, 275, 280) for hydraulically separating at least one wheel brake (225, 230) from the pump (250).

## Revendications

1. Procédé (300) pour déterminer un manque de capacité de rendement d'une pompe (250) actionnée par un moteur électrique (245) d'une système de freinage hydraulique (200) d'un véhicule automobile, comprenant les étapes suivantes:
- production d'une pression hydraulique dans un premier circuit de freinage (I.) du système de freinage (200) au moyen de plusieurs éléments de pompe (250.1 - 250.3) de la pompe (250) associés au premier circuit de freinage (I.);
- limitation de la pression hydraulique produite à une pression de test, et relevé simultané d'un premier paramètre relatif au moteur; et
- détermination d'un manque de capacité de rendement d'au moins l'un des éléments de pompe (250.1- 250.3), sur la base d'une comparaison du paramètre avec une valeur de comparaison.

2. Procédé (300) selon la revendication 1, **caractérisé en ce que** la valeur de comparaison est choisie fixe.

3. Procédé (300) selon la revendication 1, **caractérisé en ce que** la valeur de comparaison est un deuxième paramètre relatif au moteur, qui est relevé pendant une limitation, à la pression de test, d'une pression hydraulique produite dans un deuxième circuit de freinage (II.) du véhicule automobile au moyen de plusieurs éléments de pompe de la pompe (250) associés au deuxième circuit de freinage (II.).

4. Procédé (300) selon l'une des revendications 1 ou 3, **caractérisé en ce que** la valeur de comparaison est une valeur déterminée à un moment antérieur, du premier et/ou du deuxième paramètre relatif au moteur.

5. Procédé (300) selon l'une des revendications précédentes, **caractérisé en ce que** le premier et/ou le deuxième paramètre relatif au moteur indiquent respectivement un intervalle de temps.

6. Procédé (300) selon l'une des revendications précédentes, dans lequel la limitation d'une pression hydraulique est effectuée au moyen d'une vanne d'écoulement (285) associée au circuit de freinage (I., II.).

7. Procédé (300) selon l'une des revendications précédentes, comprenant en outre l'étape de détermination d'un état de véhicule stable du véhicule automobile, et ensuite d'exécution des étapes de production, de limitation et de détermination dans l'état de véhicule stable.

8. Procédé (300) selon l'une des revendications précédentes, comprenant en outre l'étape d'actionnement d'une vanne hydraulique (265, 270, 275, 280) qui isole hydrauliquement au moins un frein de roue (225, 230) de la pompe (250).

9. Produit de programme d'ordinateur comprenant des moyens de codage de programme pour la mise en oeuvre d'un procédé selon l'une des revendications précédentes, lorsque le produit de programme d'ordinateur est exécuté sur une unité de traitement (120).

10. Produit de programme d'ordinateur selon la revendication précédente, lorsqu'il est mémorisé sur un support de données pouvant être lu par ordinateur.

11. Dispositif de détermination d'un manque de capacité de rendement d'une pompe (250) actionnée par un moteur électrique (245) d'un système de freinage hydraulique (200) d'un véhicule automobile, comprenant:
- une pompe (250) pour produire une pression hydraulique dans un premier circuit de freinage (I.) du système de freinage (200), au moyen de plusieurs éléments de pompe (250.1- 250.3) de la pompe (250) associés au premier circuit de freinage (I.);
- un premier moyen de limitation (285) pour limiter la pression hydraulique à une pression de test;
- un moyen de relevé pour relever simultanément un premier paramètre relatif au moteur; et
- un moyen de détermination pour déterminer un manque de capacité de rendement d'au moins l'un des éléments de pompe (250.1 - 250.3), sur la base d'une comparaison du paramètre avec une valeur de comparaison.

12. Dispositif selon la revendication 11, comprenant en outre un deuxième moyen de limitation pour limiter une pression hydraulique qui est produite au moyen de plusieurs éléments de pompe de la pompe (250) associés à un deuxième circuit de freinage (II.).

13. Dispositif selon l'une des revendications 11 ou 12, **caractérisé en ce que** les éléments de pompe (250.1- 250.3) comprennent des unités à piston et cylindre.

14. Dispositif selon l'une des revendications 11 à 13, **caractérisé en ce que** le moyen de limitation est une vanne d'écoulement hydraulique (285).

15. Dispositif selon l'une des revendications 11 à 14, **caractérisé en ce qu'**il comprend une vanne (265, 275, 280) pour isoler hydrauliquement au moins un frein de roue (225, 230) de la pompe (250).
